Europäisches Patentamt

European Patent Office

Office européen des brevets

(19)

(11) Numéro de publication : **0 169 790**
**B1**

(12) **FASCICULE DE BREVET EUROPÉEN**

(45) Date de publication du fascicule du brevet :
02.11.89

(51) Int. Cl.⁴ : **G 01 N 21/86**, G 01 N 33/34,
G 01 N 21/21, D 21 G  9/00

(21) Numéro de dépôt : **85420122.5**

(22) Date de dépôt : **02.07.85**

(54) **Appareil pour mesurer en continu l'état de formation d'une feuille de papier.**

(30) Priorité : 17.07.84 FR 8411493

(43) Date de publication de la demande :
29.01.86 Bulletin 86/05

(45) Mention de la délivrance du brevet :
02.11.89 Bulletin 89/44

(84) Etats contractants désignés :
AT CH DE GB IT LI NL SE

(56) Documents cités :
DE–C– 868 977
FR–A– 1 566 138
US–A– 3 807 868
US–A– 4 266 142
IBM TECHNICAL DISCLOSURE BULLETIN, vol. 16,
no. 5, octobre 1973, page 1453, New York, US; H.H.
TAUB: "Improving optical transmission measurements in powdered layer samples with pinholes"
WOCHENBLATT FÜR PAPIERFABRIKATION, no. 4,
1982, pages 109-112; O. SCHWAB: "Messung der
Papierformation"
Paper Trade Journal,Septembre 1984,p.84-86

(73) Titulaire : **CENTRE TECHNIQUE DE L'INDUSTRIE DES
PAPIERS, CARTONS ET CELLULOSES**
Domaine Universitaire B.P. 7110
F-38020 Grenoble Cedex (FR)

(72) Inventeur : **Sabater, Jacques**
6 résidence des Fonds Fanettes
F-91190 Gif/Yvette (FR)
Inventeur : **Bauduin, Serge**
25 chemin de Batonnière Corenc
F-38700 La Tronche (FR)

(74) Mandataire : **Laurent, Michel et al**
Cabinet LAURENT et GUERRE B.P. 32
F-69131 Ecully Cedex (FR)

Il est rappelé que : Dans un délai de neuf mois à compter de la date de publication de la mention de la délivrance du
brevet européen toute personne peut faire opposition au brevet européen délivré, auprès de l'Office européen des
brevets. L'opposition doit être formée par écrit et motivée. Elle n'est réputée formée qu'après paiement de la taxe
d'opposition (Art. 99(1) Convention sur le brevet européen).

Jouve, 18, rue St-Denis, 75001 Paris, France

## Description

L'invention concerne un appareil pour mesurer en continu l'état de formation d'une feuille de papier.

L'expression « formation d'une feuille de papier » désigne la distribution plus ou moins régulière de la matière fibreuse dans le plan de la feuille. Cette notion est bien connue de l'homme de métier sous le terme de « épair ».

Le plus généralement, l'épair est estimé visuellement par l'examen de la transparence de la feuille de papier placée devant une boite à lumière. Il s'agit là d'une méthode, bien que largement répandue, subjective et qui nécessite donc une bonne connaissance du processus papetier et une longue pratique. En outre, par définition, cette méthode ne fournit pas de donnée ou de mesure alors que la fabrication de papiers de bonne qualité requiert des outils d'analyse objectifs.

Par ailleurs, cette méthode ne peut être effectuée qu'a posteriori sur des feuilles de papier prélevées en fin de rouleau et non pendant la fabrication même de ce papier.

Pour pallier cet inconvénient, dans le brevet français FR-A-1 566 138, on a suggéré un dispositif qui consiste à envoyer sur le papier un faisceau lumineux, puis à transformer le faisceau transmis en un signal électrique, enfin à mesurer le rapport entre la composante de courant alternatif et la composante de courant continu obtenus. Ce procédé est difficile à mettre en œuvre sur une machine à papier dans laquelle la feuille est en mouvement, car il tolère mal les oscillations de cette feuille. En outre, les résultats obtenus ne sont pas toujours très fiables, sans compter que cette méthode est limitée aux papiers de faible grammage.

Récemment, on a suggéré de remplacer le faisceau lumineux par un faisceau laser issu d'une iode laser, la lumière transmise à travers l'échantillon étant ensuite transformée en un signal électrique. Un calculateur détermine ensuite la valeur efficace de variation (RMS) de plusieurs bandes spectrales et affiche le résultat de ces valeurs (voir « Paper Trade Journal », Septembre 1984, pages 84-86). Il s'agit là d'un dispositif complexe et coûteux ne permettant pas d'éviter les perturbations de mesure provoquées par les micro-trous de la feuille à analyser. En effet, on a constaté à l'usage que certains papiers présentant de tels micro-trous laissent passer la lumière, ce qui perturbe les calculs de valeur efficace de variation.

L'invention pallie ces inconvénients. Elle concerne un appareil pour mesurer en continu l'état de formation d'une feuille de papier, qui soit économique à fabriquer, facile à mettre en œuvre et soit insensible aux micro-trous.

Dans le document « IBM Technical Disclosure Bulletin », Vol. 16, Octobre 1973, page 1453, on a décrit une installation faisant appel à un faisceau lumineux polarisé pour des mesures de transmission de la lumière à travers un échantillon sous forme d'une couche de poudre. Deux polariseurs croisés, disposés de part et d'autre de l'échantillon, permettent d'atténuer, voire d'éliminer le problème des micro-trous laissant passer la lumière. Cette solution appliquée à du papier ne donne aucune valeur sur l'état de formation de cette feuille de papier.

Cet appareil pour mesurer en continu l'état de formation d'une feuille de papier en déplacement dans un plan, qui comprend :

des moyens pour entraîner une feuille de papier en mouvement dans un plan, à une vitesse prédéterminée ;

une source lumineuse dirigeant un faisceau laser au travers de ladite feuille en mouvement, ledit faisceau laser étant polarisé dans une première direction ;

un polariseur dont l'axe de polarisation est perpendiculaire à l'axe de polarisation du faisceau laser transmis ;

une cellule photoélectrique de mesure pour capter la lumière laser transmise à travers la feuille en mouvement, et le polariseur, puis pour transformer cette lumière en un signal électrique ;

des moyens électroniques de traitement pour séparer ce signal électrique en deux composantes ;

un moyen pour calculer à partir de ces deux composantes l'indice i représentatif de l'état de formation ;

un afficheur de la valeur de cet indice I ;

se caractérise :

— en ce que le signal électrique émis amplifié est séparé en deux composantes, l'une haute fréquence A, l'autre basse fréquence B, par passage dans un ensemble comportant un filtre passe-bas et un filtre passe-haut ;

— et en ce que le moyen pour calculer l'indice I comprend :

un module analogique pour calculer la valeur efficace RMS de la composante haute-fréquence A ;

un film basse-bas pour déterminer la valeur moyenne M de la composante basse-fréquence B ;

un module diviseur pour effectuer le rapport

$$I = \frac{\text{valeur effective RMS à l'instant (t)}}{\text{valeur numérique M au même instant (t)}}$$

Avantageusement, en pratique :

— le moyen de séparation du signal électrique émis amplifié comprend le filtre passe-bas à la suite duquel on déduit la composante haute-fréquence A par soustraction de la composante basse fréquence B du signal d'entrée ;

— le polariseur est associé par sa face arrière à une lentille asphérique qui projette l'image de la partie de la feuille à analyser sur une cellule photo-électrique de mesure, qui capte la lumière de l'image de la partie éclairée de la feuille à analyser.

La manière dont l'invention peut être réalisée et les avantages qui en découlent ressortiront mieux de l'exemple de réalisation qui suit, à l'appui des figures annexées.

La figure 1 est une vue perspective générale d'un appareil de mesure de formation de feuille conforme à l'invention.

La figure 2 est une vue agrandie de la tête de mesure de l'invention.

La figure 3 est une représentation symbolique de la partie électronique de traitement de signal.

La figure 4 est une représentation également symbolique d'une variante d'exécution de cette partie électronique de mesure.

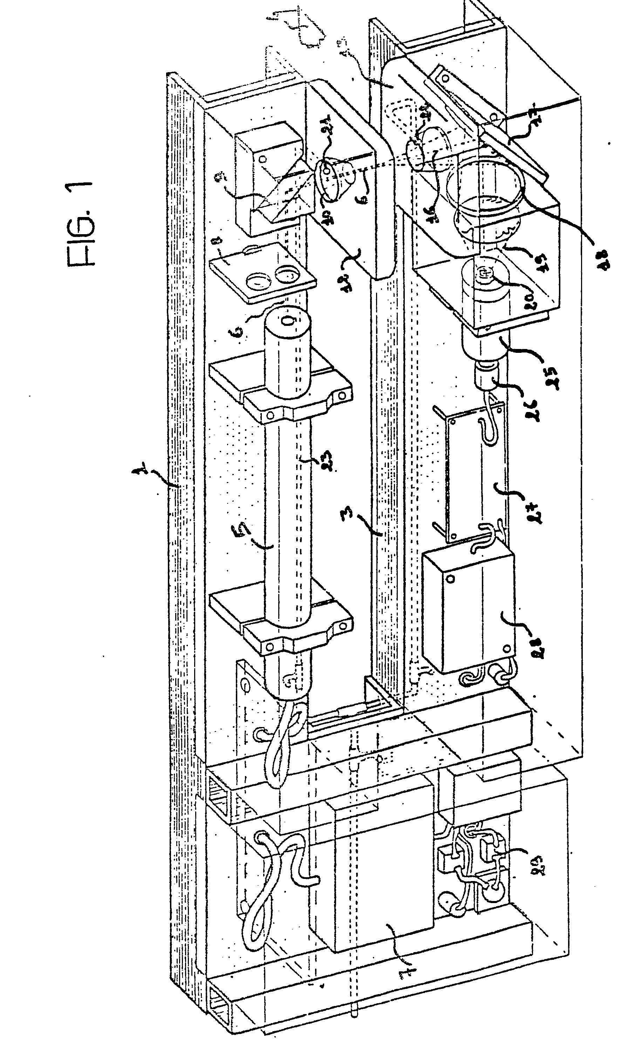

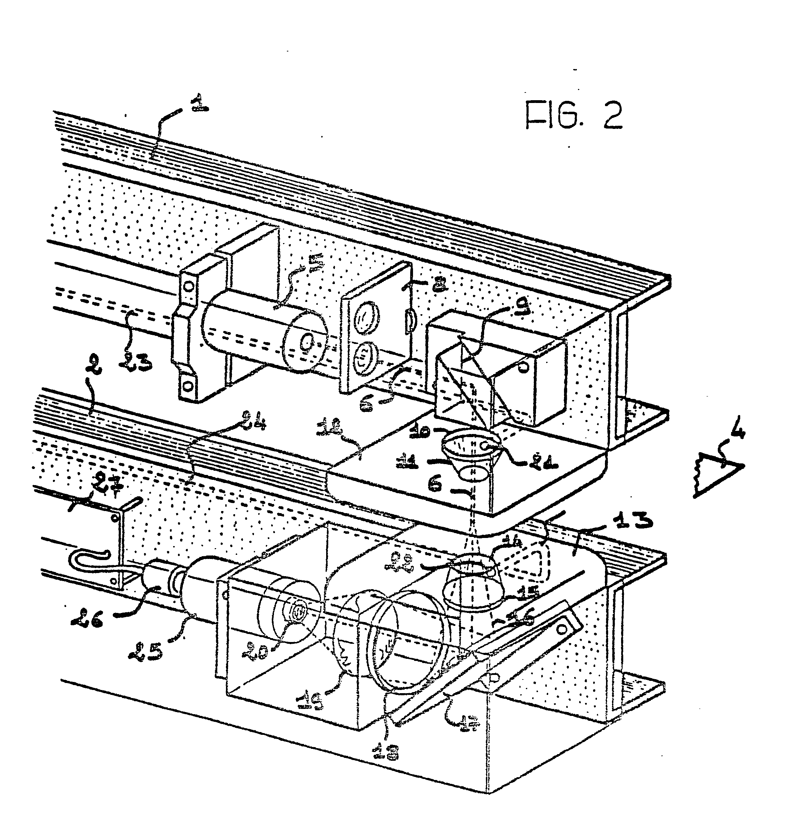

En se référant aux figures 1 et 2, l'appareil selon l'invention comprend un châssis en U (1, 2, 3) dans les branches duquel passe la feuille de papier, symbolisée par la référence (4). Cette feuille est entraînée en mouvement par des moyens classiques, non représentés, faisant partie intégrante d'une machine à papier.

La branche supérieure horizontale (1) de l'appareil comprend un laser (5) à gaz He-Ne, par exemple de 2 mW émettant un faisceau polarisé (6). Ce laser (5) est alimenté de manière connue au moyen d'un câble relié à une alimentation classique (7) de laser.

Sur le parcours du faisceau laser polarisé (6), on interpose éventuellement un dispositif rotatif à lentilles (8), divergente ou convergente, destiné à modifier la dimension de la tache laser (6) sur la feuille (4) en mouvement.

Le faisceau émis (6) est ensuite réfléchi par un prisme (9) à réflexion totale pour pénétrer dans une lame à faces parallèles (10) formant fenêtre. Cette lame (10) est placée à la grande base d'un cône (11) dont la pointe est dirigée vers le bas dans la direction de la feuille (4). Ce cône solide (11) est taillé dans une plaque horizontale (12).

Symétriquement, une deuxième plaque (13) comporte également un cône solide (14) aligné avec (11) qui est associé à une seconde lame à faces parallèles (15) formant fenêtre.

Le faisceau transmis (16) qui sort de cette lame (15) arrive ensuite sur un miroir plan (17) incliné à 45°.

Le faisceau transmis réfléchi traverse ensuite un polariseur (18) dont l'axe de polarisation est perpendiculaire à l'axe de polarisation du faisceau laser transmis (16) de manière à éliminer la lumière directe lors de la présence de micro-trous ou de vides dans la feuille (4) à analyser.

Le polariseur (18) est associé par sa face arrière à une lentille asphérique (19) focalisante qui concentre sur la cellule photoélectrique de mesure (20) l'image de la partie éclairée de la feuille (4) à analyser.

Afin d'empêcher des dépôts de salissures ou de poussières dans les cônes solides (11) et (14), ces cônes comportent des arrivées (21, 22) alimentées en air comprimé par des conduits (23, 24).

La cellule photoélectrique (20) au silicium, formant transducteur (photodiode) est montée à l'extrémité d'un bloc support cylindrique (25). Cette cellule transforme la lumière traitée en un signal électrique.

Ce signal électrique sortant de la cellule (20) est reçue par une prise (26) qui le transmet à la carte électronique pré-ampli (27) associée à son alimentation (28).

L'appareil comprend également de manière connue des relais de commande référencés (29).

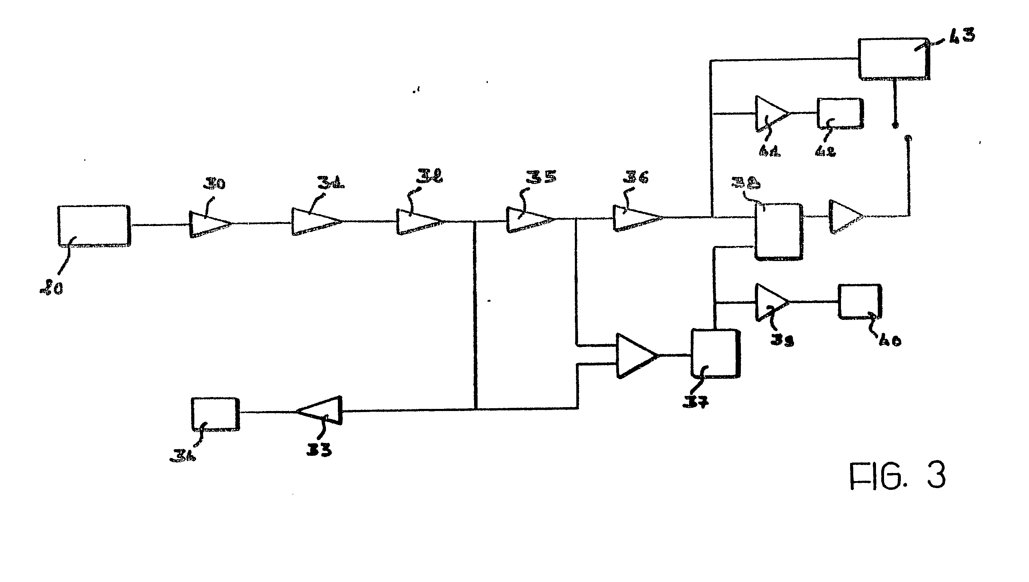

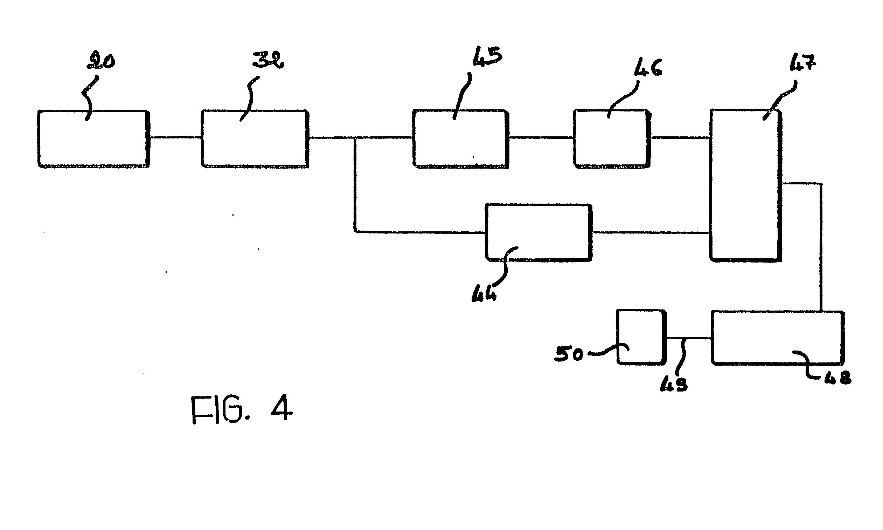

Le dispositif d'analyse du signal électrique consiste essentiellement (voir figures 3 et 4), par un filtrage électronique approprié, à séparer ce signal en deux composantes : l'une dite haute fréquence A et l'autre basse fréquence B.

La composante haute fréquence A dite « d'épair », qui correspond donc à la partie haute fréquence du spectre du signal, c'est-à-dire aux variations existants sur la feuille (4) avec des longueurs d'onde inférieures à un maximum prédéterminé est caractérisée par sa valeur efficace RMS (root mean square), c'est-à-dire par la racine carrée de la valeur quadratique moyenne ou valeur efficace.

La composante basse fréquence B dite par analogie « de grammage » correspond à la partie basse fréquence du spectre du signal, voire à sa fréquence 0, c'est-à-dire aux phénomènes qui se reproduisent sur la feuille (4) avec des longueurs d'onde supérieures à un minimum prédéterminé. Cette composante B est approximativement une fonction inverse du grammage et est caractérisée par sa valeur moyenne M.

L'indice I de formation de la feuille fournie par l'appareil est le rapport entre cette valeur efficace RMS de la composante haute fréquence A et la valeur moyenne M de la composante grammage basse fréquence B.

La photocellule au silicium (20) montée en photovoltaïque (voir figure 3) est suivie d'un convertisseur courant-tension (30). Un amplificateur (31) permet des liaisons de grande distance entre la tête et le coffret de mesure.

La bande passante du signal électrique émis est d'environ cent kHz à — 3dB.

Le signal électrique en provenance de l'amplificateur (31) pénètre sur un autre amplificateur (32) à gain variable par commutation. Ce montage particulier permet de conserver, quelque soit le gain, une valeur de contre-réaction faible constante minimisant les réglages de zéro (réglage d'offset).

Un amplificateur comparateur (33) permet d'afficher sur une LED (34) la saturation de l'amplificateur (32).

Le filtrage passe-haut nécessaire avant le calcul de la valeur efficace RMS est obtenu en soustrayant du signal émis par (32) la partie basse fréquence obtenue en sortie de l'amplificateur (35), qui est un filtre passe-bas à fréquence de coupure $f_1$.

Cette fréquence de coupure $f_1$ est adaptée à la vitesse prédéterminée de déplacement de la feuille (4), de manière à ce que la relation entre le rapport de cette vitesse et celui de la fréquence de coupure $f_1$ soit voisine de vingt centimètres.

En revanche, la valeur moyenne M du signal est obtenue par un filtre passe-bas (36) de fréquence de coupure $f_2$ variable. Le rapport entre la vitesse V de la feuille (4) analysée et cette fréquence de coupure $f_2$ est voisine de deux mètres.

La valeur efficace RMS est obtenue à l'aide du module du calcul analogique (37) comprenant un filtre passe-bas intégré ayant une fréquence de coupure $f_3$, identique à $f_2$, de manière à ce que les résultats de la division soient cohérents. La valeurs $f_1$, $f_2$ et $f_3$ sont commutées ensemble.

La division de la sortie de la valeur effective RMS en sortie de l'amplificateur (36) est effectuée par un module diviseur (38).

Un comparateur (39) détecte et signale à l'aide d'une LED (40) une saturation du module RMS (37).

Un amplificateur comparateur (41) détecte et signale à l'aide d'une LED (42) une tension inférieure à cent milli volts en sortie de (36).

Un voltmètre numérique (43) forme afficheur de l'appareil. Ce voltmètre (43) est alimenté à travers un pont diviseur au dixième, par le signal de sortie donné à l'amplificateur. Le réglage externe du zéro est effectué sur l'amplificateur (32) et est réalisé laser (5) éteint.

Ainsi, le rapport (10 × RMS)/M de sortie du module diviseur (38) s'affiche en volts.

Dans la forme de réalisation simplifiée montrée à la figure 4, le signal issu de l'amplificateur (32) est séparé en deux composantes, l'une dirigée sur un filtre passe-bas (44), l'autre sur un filtre passe-haut (45) lui-même associé à un module analogique RMS (46). Le filtre passe-bas et le module analogique RMS (46) sont connectés à un module diviseur analogique (47) qui, par un filtre passe-bas (48) optionnel, émet un signal de sortie (49) représentatif de la valeur I. Cette valeur I est affichée en (50) de manière connue, soit sur un afficheur numérique ou sur un afficheur enregistreur.

L'appareil selon l'invention présente de nombreux avantages par rapport à ceux proposés jusqu'à ce jour. On peut citer :

— le fait que cet appareil est facile à construire et à mettre en œuvre ;

— le principe du calcul de l'indice I qui est simple ;

— la mesure I de la formation effectuée est indépendante du grammage du papier traité puisque l'existence du quotient permet de s'affranchir du fait qu'une même qualité de formation donne plus de modulations du signal sur un papier de faible grammage que sur un papier épais ;

— grâce à l'utilisation d'un laser polarisé qui émet un faisceau mince, l'appareil est pratiquement insensible à des oscillations de la feuille jusqu'à des amplitudes de l'ordre du centimètre ;

— grâce à l'intensité lumineuse importante du laser polarisé, l'appareil peut être utilisé sur des papiers de fort grammage même au-delà de 250 g/m$^2$ ;

— l'utilisation de lumière polarisée qui permet d'atténuer considérablement l'influence des micro-trous ou vides qui existent dans la feuille (4) à analyser et influent considérablement la valeur de l'épair.

De la sorte, cet appareil peut être utilisé avec succès sur les machines même de fabrication du papier, même sur des machines existantes, ce que l'on ne savait pas faire en pratique jusqu'alors.

## Revendications

1. Appareil pour mesurer en continu l'état de formation d'une feuille de papier (4) en déplacement dans un plan qui comprend :

des moyens pour entraîner une feuille de papier (4) en mouvement dans un plan, à une vitesse prédéterminée ;

une source lumineuse (5) dirigeant un faisceau laser (6) au travers de ladite feuille (4) en mouvement, ledit faisceau laser (6) étant polarisé dans une première direction ;

un polariseur (18) dont l'axe de polarisation est perpendiculaire à l'axe de polarisation du faisceau laser transmis (16) ;

une cellule photoélectrique de mesure (20) pour capter la lumière laser transmise (16) à travers la feuille (4) en mouvement, et le polariseur (18), puis pour transformer cette lumière en un signal électrique ;

des moyens électroniques de traitement pour séparer ce signal électrique en deux composantes ;

un moyen pour calculer à partir de ces deux composantes l'indice I représentatif de l'état de formation ;

un afficheur de la valeur de cet indice I ;
caractérisé :
— en ce que le signal électrique émis amplifié est séparé en deux composantes, l'une haute fréquence A, l'autre basse fréquence B, par passage dans un ensemble comportant un filtre passe-bas (44) et un filtre passe-haut (43) ;
— et en ce que le moyen pour calculer l'indice I comprend :
un module analogique (37, 48) pour calculer la valeur efficace RMS de la composante haute fréquence A ;
un film passe-bas (36) pour déterminer la valeur moyenne M de la composante basse fréquence B ;
un module diviseur (38) pour effectuer le rapport :

$$I = \frac{\text{valeur effective RMS à l'instant (t)}}{\text{valeur numérique M au même instant (t)}}$$

2. Appareil selon la revendication 1, caractérisé en ce que le moyen de séparation du signal électrique émis amplifié comprend le filtre passe-bas (44) à la suite duquel on déduit la composante haute fréquence A par soustraction de la composante basse fréquence B du signal d'entrée.

3. Appareil selon l'une des revendications 1 et 2, caractérisé en ce que le polariseur (18) est associé par sa face arrière à une lentille asphérique (19) qui projette l'image de la partie de la feuille (4) à analyser sur une cellule photo-électrique de mesure (20), qui capte la lumière (16) de l'image de la partie éclairée de la feuille (4) à analyser.


**Claims**

1. Apparatus for determining a state of formation of a sheet of paper (4) moving in a plane, comprising :
— means for moving a sheet of paper (4) in a plane at a predetermined speed ;
— a light source (5) directing a laser beam (6) through said moving sheet, said laser beam (6) being polarized in a first direction ;
— a polarizer (18) of which the axis of polarization is perpendicular to the axis of polarization of the laser beam transmitted (16) ;
— a photoelectric measuring cell (20) for receiving the laser light transmitted (16) through the moving sheet (4), and the polarizer (18), then for converting said light into an electrical signal ;
— electronic processing means for separating this electrical signal into two components ;
— a means for calculating from these two components the index I representative of the state of formation ;
— a means for displaying the value of this index I ;
characterized :
— in that the electrical signal emitted and amplified is separated into two components, a highfrequency A and a low frequency B, by passage in an assembly comprising a low-pass filter (44) and a high pass filter (45) ;
— and in that the means for calculating the index I comprises :
an analog module (37, 48) for calculating the RMS value of the high frequency component A ;
a low-pass filter (36) for determining the average value M of the low frequency component B ;
a divider module (38) for effective the ration :

$$I = \frac{\text{RMS value at instant (t)}}{\text{average value M at same instant (t)}}$$

2. Apparatus according to claim 1, wherein said means for separating the electrical signal emitted and amplified comprises the low-pass filter (44), following which the high frequency component A is deduced by substraction of the low frequency component B from the input signal.

3. Apparatus according to one of claims 1 and 2, wherein the polarizer (18) is associated by its rear face with an aspherical lens (19) which projects the image of the part of the sheet (4) to be analyzed, onto a photoelectric measuring cell (20), which collects the light (16) of the image of the illuminated part of the sheet (4) to be analyzed.


**Patentansprüche**

1. Vorrichtung zur kontinuierlichen Messung der Blattbildung eines Papierbogens (4) während seiner Fortbewegung in einer Ebene, die

Mittel zum Vorwärtsbewegen des Papierbogens (4) in einer Ebene mit vorbestimmter Geschwindigkeit ;

eine Lichtquelle (5), die einen Laserstrahl (6) durch den sich bewegenden Bogen (4) richtet, wobei dieser Laserstrahl (6) in einer ersten Richtung polarisiert ist ;

einen Polarisator (18), dessen Polarisationsachse senkrecht zur Polarisationsachse des durchfallenden Laserstrahls (16) ist ;

eine photoelektrische Meßzelle (20), die das durch den sich bewegenden Papierbogen (4) und den Polarisator (18) durchfallende Laserlicht (16) einfängt und in ein elektrisches Signal umwandelt ;

elektronische Verarbeitungsmittel zum Aufspalten dieses Signals in zwei Komponenten ;

ein Mittel, um ausgehend von diesen beiden Komponenten den für den Bildungszustand repräsentativen Index I zu errechnen ;

ein Anzeigegerät für den Wert dieses Index I ;

aufweist,

dadurch gekennzeichnet,

— daß das verstärkte abgegebene elektrische Signal in zwei Komponenten, eine Hochfrequenzkomponente A und eine Niederfrequenzkomponente B aufgespalten wird durch Durchlaufen einer ein Tiefpaßfilter (44) und ein Hochpaßfilter (45) aufweisenden Anordnung ;

— und daß das Mittel zum Errechnen des Index I

einen Analogmodul (37, 38) zum Errechnen des quadratischen Mittelwertes RMS der Hochfrequenzkomponente A ;

ein Tiefpaßfilter (36) zum Bestimmen des Mittelwertes M der Niederfrequenzkomponente B ;

einen Dividiermodul (38) zur Ermittlung des Verhältniswertes

$$I = \frac{\text{Effektivwert RMS im Zeitpunkt (t)}}{\text{numerischer Wert M im gleichen Zeitpunkt (t)}}$$

aufweist.

2. Vorrichtung nach Anspruch 1, dadurch gekennzeichnet, daß das Mittel zum Aufspalten des verstärkten abgegebenen elektrischen Signals ein Tiefpaßfilter (44) aufweist, hinter demselben die Hochfrequenzkomponente A durch Substraktion der Niederfrequenzkomponente B vom Eingangssignal hergeleitet wird.

3. Vorrichtung nach einem der Ansprüche 1 und 2, dadurch gekennzeichnet, daß der Polarisator (18) an seiner Rückseite mit einer torischen Linse (19), verbunden ist, welche die Abbildung des zu analysierenden Bereichs des Bogens (4) auf eine photoelektrische Meßzelle (20) projiziert, welche das Licht (16) vor der Abbildung des beleuchteten Bereichs des analysierenden Bogens (4) einfängt.

FIG. 1

FIG. 2

FIG. 3

FIG. 4

EP 0 169 790 B1